# EUROPÄISCHE PATENTSCHRIFT

(11) **EP 3 192 165 B1**
(45) Veröffentlichungstag und Bekanntmachung des Hinweises auf die Patenterteilung: **11.09.2019**
(21) Anmeldenummer: 15800753.4
(22) Anmeldetag: 19.11.2015
(51) Int. Cl.: H02P 27/06

(54) **ÜBERTRAGUNG VON ANSTEUERSIGNALEN UND DATENSIGNALEN**
METHOD FOR JOINT TRANSMISSION OF CONTROL SIGNALS AND DIGITAL DATA SIGNALS
PROCÉDÉ DE TRANSMISSION COMMUNE DE SIGNAUX DE COMMANDE ET DE SIGNAUX DE DONNÉES NUMÉRIQUES

(30) Priorität: 05.12.2014 EP 14196554
(43) Veröffentlichungstag der Anmeldung: 19.07.2017
(73) Patentinhaber: Siemens Aktiengesellschaft, 80333 München (DE)
(72) Erfinder: DITTERICH, Jürgen, 90427 Nürnberg (DE); KLEFFEL, Rüdiger, 91056 Erlangen (DE); KLEINDIENST, Frank, 08371 Glauchau (DE)
(86) Internationale Anmeldenummer: PCT/EP2015/077073
(87) Internationale Veröffentlichungsnummer: WO 2016/087217

(56) Entgegenhaltungen:
- EP-A2- 2 371 054
- DE-A1-102011 014 753
- DE-A1-102012 211 312
- US-B1- 6 373 299

## Beschreibung

Die Erfindung betrifft ein Verfahren zur Übertragung eines Ansteuersignals und eines ersten Datensignals zwischen einer Steuervorrichtung und einer Ansteuervorrichtung für eine Leistungshalbleitervorrichtung.

Ferner betrifft die Erfindung eine Anordnung zur Durchführung eines derartigen Verfahrens.

Die Erfindung betrifft weiterhin ein System zur digitalen Übertragung mindestens eines Ansteuersignals und mindestens eines ersten Datensignals zwischen einer Steuervorrichtung und einer Ansteuervorrichtung und zur digitalen Übertragung mindestens eines Rückmeldesignals zusammen mit mindestens einem zweiten Datensignal in der Gegenrichtung mit mindestens einer derartigen Anordnung.

Ein derartiges Verfahren kommt bei der Ansteuerung von Leistungshalbleitern, insbesondere in Stromrichtern, zum Einsatz. Mögliche Anwendungen sind: Elektrische Antriebe, Windkraftsysteme, Bahnsysteme und Energietechnik. Über die Schnittstelle zwischen Steuervorrichtung und Ansteuervorrichtung sollen zwei verschiedene Arten von Signalen übertragen werden:
- Zeitdeterministische Echtzeitsignale zur Ansteuerung der Leistungshalbleiter und deren Rückmeldung, und
- Datensignale mit Zusatzinformationen, beispielsweise zur Parametrierung, Diagnose und Übermittlung von Messwerten.

Die zeitdeterministischen Echtzeitsignale dürfen in ihrer Form nicht verändert und nur um einen geringen, genau festgelegten Betrag, nämlich die Laufzeit der Übertragungsstrecke, zeitlich verzögert werden.

Beide Informationen dürfen sich nicht gegenseitig beeinflussen. Wegen der hohen zeitlichen Anforderungen bei Schutzeingriffen der Steuervorrichtung oder bei Anwendungen mit hoher Schaltfrequenz der Leistungshalbleitervorrichtung kann und darf die Frequenz der Ansteuer- und Rückmeldesignale höher sein als die Datenübertragungsrate der Zusatzinformation.

Bisher wurden aufgrund der speziellen Signalanforderungen zwei unterschiedliche physikalische Übertragungskanäle eingesetzt. Ein physikalischer Übertragungskanal ist eine Verbindung mit der messtechnisch erfassbare Signale übertragen werden. In diesem Fall sind die beiden unterschiedlichen physikalischen Übertragungskanäle beispielsweise zwei verschiedene Kabel, welche sich nicht gegenseitig beeinflussen. Eine Verbindung über Lichtwellenleiter oder eine drahtlose Verbindung ist ebenfalls ein physikalischer Übertragungskanal. Da sich die Signale auf den beiden Kabeln nicht gegenseitig beeinflussen, findet die Übertragung über zwei unterschiedliche Übertragungskanäle statt.

Die oben beschriebene herkömmliche Lösung für die Übertragung ist mit zusätzlichem Aufwand für den Betrieb zweier unterschiedlicher Übertragungskanäle und Kosten für die Verlegung der physikalischen Verbindungen zwischen Steuervorrichtung und Ansteuervorrichtung verbunden. Die Übermittlung der Ansteuersignale und Rückmeldesignale innerhalb eines Datenprotokolls bekannter Datenschnittstellen, wie beispielsweise Ethernet, Local Operating Network (LON), Controller Area Network (CAN), Universal Serial Bus (USB), ist wegen der zeitdeterministischen Echtzeitanforderungen des Ansteuer- und Rückmeldesignals nicht möglich.

Aus EP 2 371 054 A2 ist ein Umrichter zur Speisung eines Motors bekannt, wobei zwischen einem Steuerelektronikmodul und einem Kopplungsmodul eine erste Schnittstelle zur Signalübermittelung vorgesehen ist und zwischen einem Kopplungsmodul und einem Bremschoppermodul sowie zwischen einem Kopplungsmodul und jedem Phasenmodul jeweils eine zweite Schnittstelle zur Signalübertragung ausgeführt ist.

In DE 10 2011 014 753 A1 wird ein Antriebssystem und Verfahren zum Betreiben eines Antriebssystems offenbart, das zumindest einen Elektromotor aufweist, welcher von einem Umrichter gespeist wird. Am Motor sind zumindest ein Sensor und ein Aktor angeordnet, wobei der Umrichter und der Motor über ein Hybridkabel verbunden sind. Das Hybridkabel weist Starkstromleitungen und Schwachstromleitungen auf, wobei als Schwachstromleitungen mindestens zwei Signalleitungen und zwei Versorgungsleitungen verwendet werden. Über die Signalleitungen sind die von den Sensoren erfassten Werte und, insbesondere zeitlich versetzt, die für den Aktor bestimmten Ansteuerdaten übertragbar.

In WO 2010/060585 A2 wird ein Umrichter zur Speisung eines Motors offenbart, welcher ein Steuerelektronikmodul zur Erzeugung von Ansteuersignalen für ansteuerbare Halbleiterschalter, insbesondere Leistungshalbleiterschalter sowie mit jeweils einer Motorzuleitung verbundene Phasenmodule, umfassend Halbleiterschalter und ein Bremschoppermodul mit ansteuerbarem Halbleiterschalter offenbart, wobei zwischen dem Steuerelektronikmodul und einem Kopplungsmodul eine erste Schnittstelle zur Signalübermittelung vorgesehen ist und zwischen dem Kopplungsmodul und dem Bremschoppermodul sowie zwischen dem Kopplungsmodul und jedem Phasenmodul jeweils eine zweite Schnittstelle zur Signalübertragung ausgeführt ist.

In DE 10 2012 211 312 A1 wird ein Verfahren zum gleichzeitigen Übertragen von mindestens zwei hochfrequenten Übertragungssignalen über eine gemeinsame Hochfrequenzleitung durch Bereitstellen von zumindest zwei Eingangssignalen an jeweiligen Eingangsanschlüssen für die Übertragung von hochfrequenten Signalen eines Magnetresonanztomographen offenbart, wobei die Eingangssignale Signale gleicher Trägerfrequenz sind.

Der Erfindung liegt die Aufgabe zugrunde, ein Verfahren der eingangs genannten Art anzugeben, bei dem der Aufwand zum Betrieb der physikalischen Übertragungskanäle und die Kosten für die Verlegung der physikalischen Verbindung zwischen Steuervorrichtung und Ansteuervorrichtung minimiert sind.

Diese Aufgabe wird erfindungsgemäß durch ein Verfahren der eingangs genannten Art dadurch gelöst, dass die Übertragung des Ansteuersignals und des ersten Datensignals gleichzeitig und über einen gemeinsamen Übertragungskanal stattfindet, wobei das erste Datensignal mit dem Ansteuersignal über ein digitales Modulationsverfahren oder Codierungsverfahren kombiniert wird, wobei ein Rückmeldesignal gemeinsam mit einem zweiten Datensignal in der Gegenrichtung übertragen wird, wobei eine Codierungslänge für das erste Datensignal verwendet wird, die kürzer als die Intervalllänge des Ansteuersignals ist und/oder eine Codierungslänge für das zweite Datensignal verwendet wird, die kürzer als die Intervalllänge des Rückmeldesignals ist.

Eine derartige Verknüpfung kann beispielweise durch einen Mischvorgang durchgeführt werden. Die Information wird empfangsseitig durch einen Demodulator oder Decoder vollständig zurückgewonnen.

Die Übertragung des Ansteuersignals und des ersten Datensignals erfolgt über einen gemeinsamen physikalischen Übertragungskanal. Dies kann beispielsweise ein Kabel aber auch ein Lichtwellenleiter sein. Da die zeitdeterministischen Echtzeitforderungen für das Ansteuersignal eingehalten werden müssen, muss die Übertragung gleichzeitig erfolgen. Diese Anforderung wird beispielsweise von einem konventionellen Zeitmultiplex-Verfahren nicht erfüllt, bei dem in unterschiedlichen Zeitintervallen verschiedene Signale unabhängig voneinander übertragen werden.

Die Vorteile der Erfindung zeigen sich beispielsweise bei einer Kabelverbindung darin, dass je ein Kabel bei der Übertragung des Ansteuersignals, welches beispielsweise ein Schaltsignal sein kann, zusammen mit dem ersten Datensignal, sowie bei der Übertragung des Rückmeldesignals zusammen mit dem zweiten Datensignal, wegfällt und sich der Aufwand zum Betrieb der Schnittstellen entsprechend minimiert. Die Kosten für die Verlegung der Kabel zwischen Steuervorrichtung und Ansteuervorrichtung verringern sich ebenfalls. Ein weiterer Vorteil ist, dass sich die Anzahl der mechanischen Fehlerquellen durch die Reduzierung der Anzahl benötigter Steckverbindungen gegenüber dem Stand der Technik verringert und ein Übersprechen zwischen Ansteuersignal und erstem Datensignal bzw. zwischen Rückmelde- und zweitem Datensignal prinzipbedingt entfällt.

Ein Rückmeldesignal kann beispielsweise von einem Überwachungssensor, welcher eine Leistungshalbleitervorrichtung überwacht, erzeugt werden. Ein Vorteil dieser Ausführungsform besteht darin, dass für die Übertragung der Zusatzinformation kein zusätzlicher physikalischer Übertragungskanal benötigt wird und sich sowohl der Aufwand als auch die Kosten im Vergleich zu einer separaten Übertragung des Rückmeldesignals und des zweiten Datensignals deutlich reduzieren.

Die Codierungslänge beschreibt die Länge eines Bits des ersten oder zweiten Datensignals. Da die Änderung der Ansteuersignale und Rückmeldesignale nur zu diskreten Zeitpunkten erfolgen kann, entsteht eine konstante Intervalllänge für das Ansteuersignal und das Rückmeldesignal, wobei innerhalb des Intervalls keine Änderungen erfolgen. Dies ist besonders vorteilhaft, da sich das Ansteuersignal und das Rückmeldesignal vollständig und unverfälscht rekonstruieren lassen. Der Übertragungszeitraum besteht aus mindestens zwei Intervalllängen.

Weiterhin wird die Aufgabe erfindungsgemäß durch eine Anordnung zur Durchführung eines derartigen Verfahrens gelöst, wobei die Anordnung einen Sender, einen Übertragungskanal und einen Empfänger aufweist, wobei der Sender eine Mischervorrichtung aufweist, welche zur Kombination des Ansteuersignals mit mindestens einem ersten Datensignal oder des Rückmeldesignals mit mindestens einem zweiten Datensignal vorgesehen ist.

Diese Anordnung ist vorteilhaft, da für die Übertragung der Zusatzinformation keine zusätzliche Schnittstelle benötigt wird und sich sowohl der Aufwand als auch die Kosten im Vergleich zu einer separaten physikalischen Schnittstelle deutlich reduzieren.

Der Sender weist eine Mischervorrichtung auf, welche zur Kombination des Ansteuersignals mit mindestens einem ersten Datensignal oder des Rückmeldesignals mit mindestens einem zweiten Datensignal vorgesehen ist. Dies ist besonders vorteilhaft weil diese Architektur einfach und günstig in Hardware zu implementieren ist.

Ferner wird die Aufgabe erfindungsgemäß durch System zur digitalen Übertragung mindestens eines Ansteuersignals und mindestens eines ersten Datensignals zwischen einer Steuervorrichtung und einer Ansteuervorrichtung und zur digitalen Übertragung mindestens eines Rückmeldesignals zusammen mit mindestens einem zweiten Datensignal in der Gegenrichtung mit mindestens einer derartigen Anordnung gelöst, wobei die Ansteuervorrichtung dafür vorgesehen ist, eine Leistungshalbleitervorrichtung mit einem analogen Ansteuersignal anzusteuern.

Auf vorteilhafte Weise liegen das Ansteuersignal und das erste Datensignal näherungsweise rechteckförmig vor. Das Ansteuersignal und das erste Datensignal weisen bevorzugt zwei unterschiedliche Signalpegel auf, welche beispielsweise einem "Low" und einem "High"-Pegel beziehungsweise einem "on/off"-Pegel beziehungsweise einer logischen "0" und einer logischen "1" entsprechen. Dies ist besonders vorteilhaft, da eine Kombination von beispielsweise dem Ansteuersignal mit dem ersten Datensignal einfach, leistungseffizient und kostengünstig zu realisieren ist.

In besonders vorteilhafter Weise werden das Ansteuersignal mit einer höheren Datenrate als das erste Datensignal und/oder das Rückmeldesignal mit einer höheren Datenrate als das zweite Datensignal übertragen. Hierbei ist die Codierungslänge bevorzugt kleiner als die Intervalllänge, wobei der Übertragungszeitraum mindestens zwei Intervalllängen umfasst. Dies hat den Vorteil, dass die zeitdeterministischen Echtzeitforderungen für das Ansteuersignal und das Rückmeldesignal eingehalten werden.

In einer vorteilhaften Ausgestaltung werden das erste Datensignal mit einem Ansteuersignal und/oder das zweite Datensignal mit einem Rückmeldesignal unter Verwendung einer XOR-Verknüpfung oder eine XNOR-Verknüpfung kombiniert. Die Abkürzungen XOR und XNOR entstammen der Kombinatorik, wobei eine XOR-Verknüpfung eine Abkürzung für eine Exklusiv-Oder-Verknüpfung ist und eine XNOR-Verknüpfung eine Abkürzung für eine Exklusiv-Nicht-Oder-Verknüpfung ist.

Bei einer XOR- beziehungsweise XNOR-Verknüpfung werden innerhalb der Codierungslänge ein Ansteuersignal mit einem ersten Datensignal und ein Rückmeldesignal mit einem zweiten Datensignal durch eine XOR-Verknüpfung oder XNOR- Verknüpfung logisch miteinander verknüpft. Dies hat den Vorteil, dass eine derartige logische Verknüpfung mit Hilfe eines entsprechenden Gatters einfach, leistungseffizient und kostengünstig zu realisieren ist.

In besonders vorteilhafter Weise wird das Datensignal mit Hilfe einer Pulsphasencodierung und/oder Pulsweitencodierung insbesondere durch Invertierung codiert.

Bei einer Pulsphasencodierung oder Pulsphasenmodulation, kurz PPM, oder auch Pulspositionscodierung, wird innerhalb des Übertragungszeitraums in Abhängigkeit vom Wert des ersten Datensignals beziehungsweise zweiten Datensignals die Codierungslänge an unterschiedlichen Codierungszeitpunkten eingefügt. Innerhalb der Codierungslänge werden das Ansteuersignal beziehungsweise das Rückmeldesignal invertiert.

Bei der Pulsweitencodierung oder Pulsweitenmodulation, welche auch Pulslängenmodulation oder Pulsbreitenmodulation genannt wird, wird innerhalb des Übertragungszeitraums in Abhängigkeit vom Wert des ersten Datensignals beziehungsweise zweiten Datensignals die Codierungslänge verändert. Innerhalb der Codierungslänge werden das Ansteuersignal beziehungsweise das Rückmeldesignal invertiert.

Beliebige Kombinationen der Codierungsvarianten sind möglich. Damit lassen sich mehrwertige erste bzw. zweite Datensignale und/oder mehrere erste bzw. zweite Datensignale codieren.

In einer bevorzugten Ausführungsform werden mehrere erste Datensignale mit einem Ansteuersignal und/oder mehrere zweite Datensignale mit einem Rückmeldesignal kombiniert. Diese Datensignale können voneinander abhängig oder unabhängig sein. Abhängige Datensignale haben den Vorteil, dass eine mehrwertige Information übertragen werden kann. Unabhänginge Datensignale haben den Vorteil, dass Zusatzinformationen aus mehreren Datenquellen gleichzeitig übertragen werden können.

In einer vorteilhaften Ausgestaltung wird aus den Datensignalen mehrerer Übertragungszeiträume ein Datenprotokoll gebildet. Ein Übertragungszeitraum ist die Verbindung mehrerer Intervalle für die Übertragung einer oder mehrerer digitaler Informationen. Die Verwendung eines Datenprotokolls erhöht die Zuverlässigkeit der Verbindung, da anhand des Protokolls feststellbar ist ob die gesamte Information angekommen ist und ob Fehler vorliegen.

In einer besonders vorteilhaften Ausführungsform weist der Empfänger eine Vorrichtung, welche zur Erkennung eines Synchronisationszeitpunkts vorgesehen ist, mindestens eine Biterkennungseinheit, welche zur Zurückgewinnung und Ausgabe des Datensignals vorgesehen ist, eine Ansteuererkennungseinheit, welche zur Zurückgewinnung und Ausgabe des Ansteuersignals oder des Rückmeldesignals vorgesehen ist und eine Phasenregelschleife, welche zur Bereitstellung eines Referenzzeitpunkts für die Ansteuererkennungseinheit und die Biterkennungseinheit vorgesehen ist, auf. Diese Implementierung hat den Vorteil, dass der Empfänger sich nur mit Hilfe des codierten Signals auf den Sender synchronisieren kann und damit eine zusätzliche Synchronisationsleitung entfällt.

Im Folgenden wird die Erfindung anhand der in den Figuren dargestellten Ausführungsbeispiele näher beschrieben und erläutert. Es zeigen:
- FIG 1: eine schematische Darstellung eines Systems zur Ansteuerung einer Leistungshalbleitervorrichtung,
- FIG 2: eine schematische Darstellung eines Senders,
- FIG 3: eine schematische Darstellung eines Empfängers,
- FIG 4: ein Zeitablaufdiagramm für die Codierung eines uncodierten Ansteuersignals oder Rückmeldesignals mit je einem Datensignal mittels XOR-Verknüpfung,
- FIG 5: ein Zeitablaufdiagramm für die Codierung eines uncodierten Ansteuersignals oder Rückmeldesignals mit je einem Datensignal mittels Pulsphasencodierung, und
- FIG 6: ein Zeitablaufdiagramm für die Codierung eines uncodierten Ansteuersignals oder Rückmeldesignals mit je einem Datensignal mittels Pulsweitencodierung.

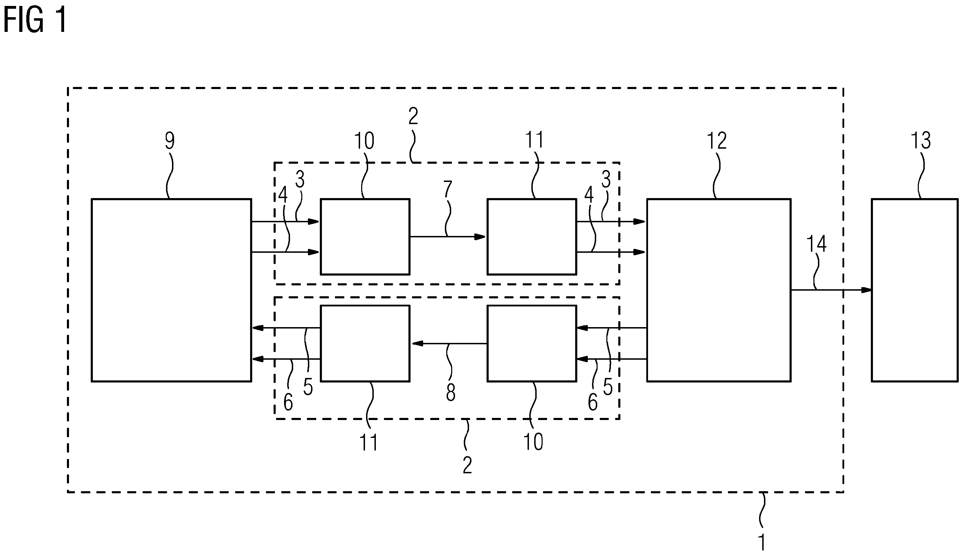

FIG 1 zeigt eine schematische Darstellung eines Systems 1 zur Ansteuerung einer Leistungshalbleitervorrichtung 13, welche eine Steuervorrichtung 9, eine Ansteuervorrichtung 12, eine Leistungshalbleitervorrichtung 13 sowie zwei Anordnungen 2 zur Codierung eines Ansteuersignals 3 oder eines Rückmeldesignals 6 mit je einem Datensignal 4, 5 aufweist. Jede Anordnung besteht aus einem Sender 10 und einem Empfänger 11. Das Ansteuersignal 3 und das erste Datensignal 4 werden von der Steuervorrichtung 9 generiert und vom Sender 10 zu einem ersten codierten Signal 7 kombiniert. Aus diesem Signal 7 wird vom Empfänger 11 das Ansteuersignal 3 und das das erste Datensignal 4 rekonstruiert. Mit Hilfe der Ansteuervorrichtung 12 wird der Leistungshalbleitervorrichtung 13 das Ansteuersignal 14 zugeführt. Das Rückmeldesignal 6 der Ansteuervorrichtung 12 der Leistungshalbleitervorrichtung 13 wird zusammen mit einem zweiten Datensignal 5 von einem Sender 10 zu einem zweiten codierten Signal 8 kombiniert. Aus diesem Signal 8 wird vom Empfänger 11 das Rückmeldesignal 6 und das zweite Datensignal 5 rekonstruiert und an die Steuervorrichtung zur weiteren Verarbeitung zurückgeleitet.

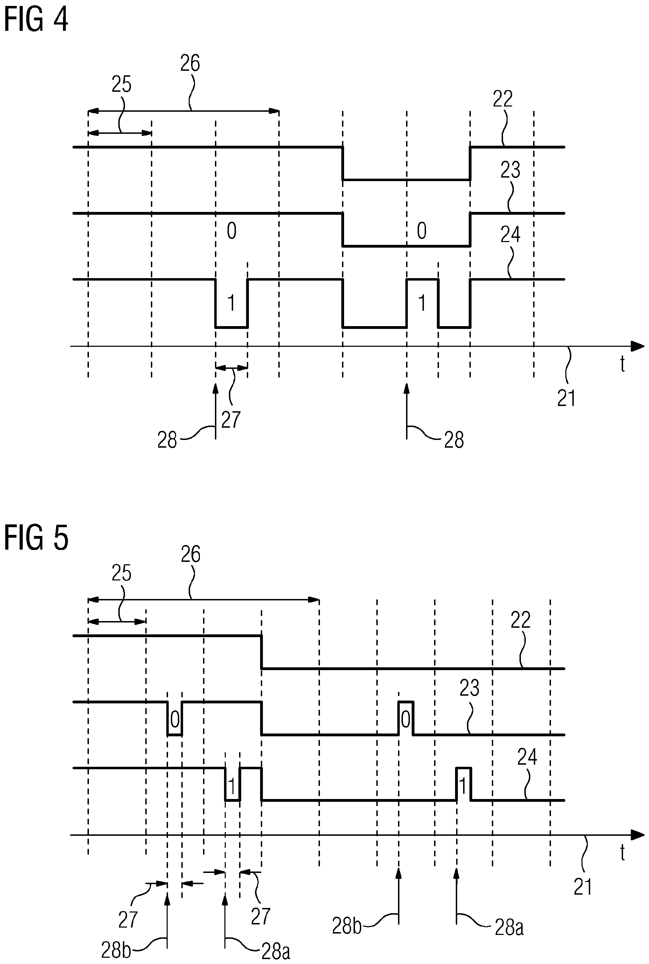

Zur Modulation oder Mischung der Signale 3, 4, 5, 6 können in diesem Verfahren folgende Modulationsvarianten oder Codierungsvarianten herangezogen werden, vergleiche hierzu FIG 4 bis 6: Eine XOR- bzw. XNOR-Verknüpfung, eine Pulsphasencodierung und eine Pulsweitencodierung. Für alle drei Codierungsvarianten gilt:
- Die Codierungslänge 27, 27a, 27b ist kleiner als die Intervalllänge 25.
- Der Übertragungszeitraum 26 besteht aus mindestens zwei Intervalllängen 25.

Bei einer XOR- beziehungsweise XNOR-Verknüpfung werden innerhalb der Codierungslänge 27 ein Ansteuersignal 3 mit einem ersten Datensignal 4 und ein Rückmeldesignal 6 mit einem zweiten Datensignal 5 durch eine XOR-Verknüpfung oder XNOR-Verknüpfung logisch miteinander verknüpft.

Bei einer Pulsphasencodierung wird innerhalb des Übertragungszeitraums in Abhängigkeit vom Wert des ersten Datensignals 4 beziehungsweise zweiten Datensignals 5 die Codierungslänge 27 an unterschiedlichen Codierungszeitpunkten 28a, 28b eingefügt. Innerhalb der Codierungslänge 27 werden das Ansteuersignal 3 beziehungsweise das Rückmeldesignal 6 invertiert.

Bei einer Pulsweitencodierung wird innerhalb des Übertragungszeitraums in Abhängigkeit vom Wert des ersten Datensignals 4 beziehungsweise zweiten Datensignals 5 die Codierungslänge 27a, 27b verändert. Innerhalb der Codierungslänge werden das Ansteuersignal 3 beziehungsweise das Rückmeldesignal 6 invertiert.

Beliebige Kombinationen der Codierungsvarianten sind möglich. Damit lassen sich mehrwertige erste bzw. zweite Datensignale und/oder mehrere erste bzw. zweite Datensignale codieren.

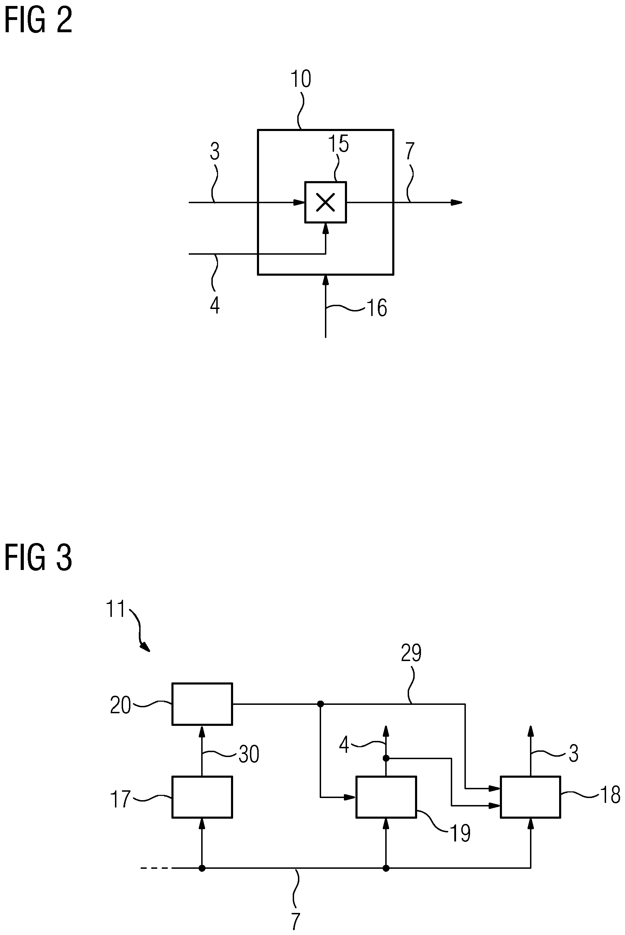

FIG 2 zeigt eine schematische Darstellung eines Senders 10, welcher eine Mischervorrichtung 15 aufweist. Exemplarisch wird die Codierung des ersten codierten Signals 7 aus einem Ansteuersignal 3 und einem ersten Datensignal 4 dargestellt. Dabei werden ein Ansteuersignal 3 und ein erstes Datensignal 4 der Mischervorrichtung 15 zugeführt und zu einem ersten codierten Signal 7 kombiniert. Außerdem wird ein Referenztakt 16 zugeführt.

Die Generierung des zweiten codierten Signals 8 aus dem Rückmeldesignal 6 und dem zweiten Datensignal 5 erfolgt auf gleiche Weise.

In FIG 3 ist eine schematische Darstellung eines Empfängers 11 abgebildet. Im Empfänger werden aus einem codierten Signal 7, 8 das Ansteuersignal 3 beziehungsweise das Rückmeldesignal 6 und ein Datensignal 4, 5 gewonnen. Hierzu wird das codierte Signal 7, 8 abgetastet und verarbeitet.

Der Empfänger setzt sich aus einer Vorrichtung zur Erkennung des Synchronisationszeitpunktes 17, einer Phasenregelschleife 20, einer Ansteuererkennungseinheit 18 und einer Biterkennungseinheit 19 zusammen.

Exemplarisch wird die Rekonstruktion des Ansteuersignals 3 und des ersten Datensignals 4 aus dem ersten codierten Signal 7 dargestellt. Das erste codierte Signal 7 wird gleichzeitig der Vorrichtung zur Erkennung des Synchronisationszeitpunktes 17, der Ansteuererkennungseinheit 18 und der Biterkennungseinheit 19 zugeführt. Von der Vorrichtung zur Erkennung des Synchronisationszeitpunktes 17 wird ein geeigneter Synchronisationszeitpunkt 30 detektiert, der eine Phasenregelschleife 20 speist. Das Ausgangssignal der Phasenregelschleife 20 liefert für die Ansteuererkennungseinheit 18 und die Biterkennungseinheit 19 einen Referenzzeitpunkt 29. Exemplarisch werden durch die Ansteuererkennungseinheit 18 aus dem ersten codierten Signal 7 das Ansteuersignal 3 und aus der Biterkennungseinheit 19 das erste Datensignal 4 zurückgewonnen.

Die Rekonstruktion des Rückmeldesignals 6 und des zweiten Datensignals 5 aus dem zweiten codierten Signal 8 erfolgt auf gleiche Weise.

In FIG 4 ist ein Zeitablaufdiagramm für die Codierung eines uncodierten Ansteuersignals oder Rückmeldesignals 22 mit je einem Datensignal mittels XOR-Verknüpfung dargestellt. Entlang der Zeitachse 21 verläuft das uncodierte Ansteuersignal oder Rückmeldesignal 22, welches in mehrere Intervalle 25 innerhalb eines Übertragungszeitraumes 26 aufgeteilt wird. Die Zusatzinformation wird für die Werte "0" oder "1" zu gleichen Zeitpunkten im Übertragungszeitraum durch XOR-Verknüpfung codiert. Alternativ kann die Codierung mit einer XNOR-Verknüpfung erfolgen. Entsprechend der Wahrheitstabelle der XOR-Verknüpfung ändert sich der Signalverlauf bei Codierung mit "0" 23 zum Codierungszeitpunkt 28 nicht. Der Signalverlauf bei Codierung mit "1" 24 hingegen wird zum Codierungszeitpunkt 28 für eine konstante Codierungslänge 27 invertiert.

FIG 5 zeigt ein Zeitablaufdiagramm für die Codierung eines uncodierten Ansteuersignals oder Rückmeldesignals 22 mit je einem Datensignal mittels Pulsphasenmodulation oder auch Pulsphasencodierung genannt. Bei dieser Codierungsvariante wird der Codierungszeitpunkt 28 variiert während die Codierungslänge 27 konstant bleibt. Der Signalverlauf bei einer Codierung mit "0" 23 wird zum Codierungszeitpunkt für "0" 28b für eine Codierungslänge 27 invertiert, der Signalverlauf bei einer Codierung mit "1" 24 wird zum Codierungszeitpunkt für "1" 28a für dieselbe Codierungslänge 27 invertiert.

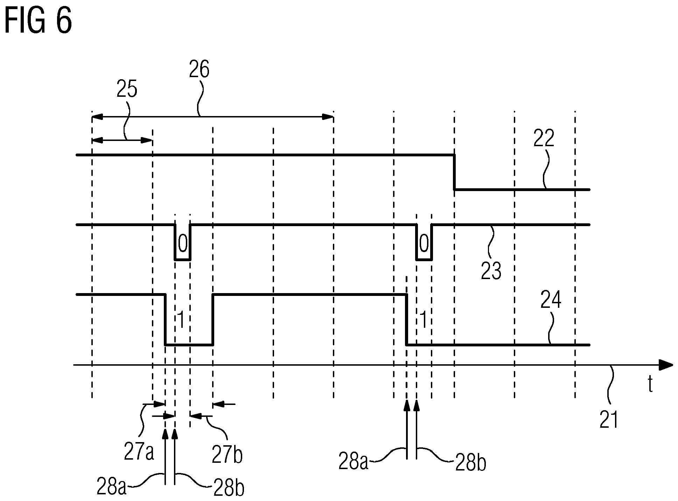

FIG 6 zeigt ein Zeitablaufdiagramm für die Codierung eines uncodierten Ansteuersignals oder Rückmeldesignals 22 mit je einem Datensignal mittels Pulsweitenmodulation oder auch Pulsweitencodierung genannt. Bei dieser Codierungsvariante wird der Signalverlauf zum Codierungszeitpunkt 28 in jedem Fall invertiert. Der Signalverlauf bei Codierung mit "0" 23 und der Signalverlauf bei Codierung mit "1" 24 unterscheiden sich in der Codierungslänge 27. Optional kann zusätzlich der Codierungszeitpunkt 28 variiert werden. Der Signalverlauf bei Codierung mit "0" 23 wird zum Codierungszeitpunkt für "0" 28b für die Codierungslänge für "0" 27b invertiert, der Signalverlauf bei Codierung mit "1" 24 wird zum Codierungszeitpunkt für "1" 28a für die Codierungslänge für "1" 27a invertiert.

Zusammenfassend betrifft die Erfindung ein Verfahren zur Übertragung eines Ansteuersignals 3 und eines ersten Datensignals 4 zwischen einer Steuervorrichtung 9 und einer Ansteuervorrichtung 12 einer Leistungshalbleitervorrichtung 13. Um den Aufwand zum Betrieb der physikalischen Übertragungskanäle und die Kosten für die Verlegung der physikalischen Verbindung zwischen Steuervorrichtung 9 und Ansteuervorrichtung 12 zu minimieren, wird vorgeschlagen, dass die Übertragung des Ansteuersignals 3 und des ersten Datensignals 4 gleichzeitig und über einen gemeinsamen Übertragungskanal stattfindet, wobei das erste Datensignal 4 mit dem Ansteuersignal 3 über ein digitales Modulationsverfahren oder Codierungsverfahren kombiniert wird.

## Patentansprüche

1. Verfahren zur Übertragung eines Ansteuersignals (3) und eines ersten Datensignals (4) zwischen einer Steuervorrichtung (9) und einer Ansteuervorrichtung (12) für eine Leistungshalbleitervorrichtung (13), **gekennzeichnet dadurch, daß** die Übertragung des Ansteuersignals (3) und des ersten Datensignals (4) von der Steuervorrichtung (9) zu der Ansteuervorrichtung (12) gleichzeitig und über einen gemeinsamen Übertragungskanal stattfindet,
das erste Datensignal (4) mit dem Ansteuersignal (3) über ein digitales Modulationsverfahren oder Codierungsverfahren kombiniert wird,
ein Rückmeldesignal (6) gemeinsam mit einem zweiten Datensignal (5) in der Gegenrichtung übertragen wird, **und** eine Codierungslänge (27) für das erste Datensignal (4) verwendet wird, die kürzer als die Intervalllänge (25) des Ansteuersignals (3) ist und/oder eine Codierungslänge (27) für das zweite Datensignal (5) verwendet wird, die kürzer als die Intervalllänge (25) des Rückmeldesignals (6) ist.

2. Verfahren nach Anspruch 1,
wobei das Ansteuersignal (3) und das erste Datensignal (4) näherungsweise rechteckförmig vorliegen.

3. Verfahren nach Anspruch 1,
wobei das Rückmeldesignal (6) und das zweiten Datensignal (5) näherungsweise rechteckförmig vorliegen.

4. Verfahren nach einem der vorherigen Ansprüche,
wobei das zweite Datensignal (5) mit dem Rückmeldesignal (6) über ein digitales Modulationsverfahren oder Codierungsverfahren kombiniert wird.

5. Verfahren nach einem der vorherigen Ansprüche,
wobei das Ansteuersignal (3) mit einer höheren Datenrate als das erste Datensignal (4) und/oder das Rückmeldesignal (6) mit einer höheren Datenrate als das zweite Datensignal (5) übertragen werden.

6. Verfahren nach einem der vorherigen Ansprüche,
wobei das erste Datensignal (4) mit einem Ansteuersignal (3) und/oder das zweite Datensignal (5) mit einem Rückmeldesignal (6) unter Verwendung einer XOR-Verknüpfung oder einer XNOR-Verknüpfung kombiniert werden.

7. Verfahren nach einem der vorherigen Ansprüche,
wobei das Datensignal (4, 5) mit Hilfe einer Pulsphasencodierung und/oder Pulsweitencodierung insbesondere durch Invertierung, codiert wird.

8. Verfahren nach einem der vorherigen Ansprüche,
wobei mehrere erste Datensignale (4) mit einem Ansteuersignal (3) und/oder mehrere zweite Datensignale (5) mit einem Rückmeldesignal (6) kombiniert werden.

9. Verfahren nach einem der vorherigen Ansprüche,
wobei mindestens ein mehrwertiges erstes Datensignal (4) mit mindestens einem Ansteuersignal (3) und/oder mindestens ein mehrwertiges zweites Datensignal (5) mit mindestens einem Rückmeldesignal (6) kombiniert werden.

10. Verfahren nach einem der vorherigen Ansprüche,
**dadurch gekennzeichnet, dass** digitale Informationen und/oder Datenprotokolle übertragen werden.

11. Anordnung (2) zur Durchführung eines Verfahrens nach einem der Ansprüche 1 bis 10,
wobei die Anordnung einen Sender (10), einen Übertragungskanal und einen Empfänger (11) aufweist, **gekennzeichnet dadurch, daß** der Sender (10) eine Mischervorrichtung (15) aufweist, welche zur Kombination des Ansteuersignals (3) mit mindestens einem ersten Datensignal (4) oder des Rückmeldesignals (6) mit mindestens einem zweiten Datensignal (5) vorgesehen ist.

12. Anordnung (2) nach Anspruch 11,
wobei der Empfänger (11) folgendes aufweist:
- eine Vorrichtung zur Erkennung des Synchronisationszeitpunkts (17),
- mindesten eine Biterkennungseinheit (19), welche zur Zurückgewinnung und Ausgabe des Datensignals (4,5) vorgesehen ist,
- eine Ansteuererkennungseinheit (18), welche zur Zurückgewinnung und Ausgabe des Ansteuersignals (3) oder des Rückmeldesignals (6) vorgesehen ist, und
- eine Phasenregelschleife (20), welche zur Bereitstellung eines Referenzzeitpunkts (29) für die Biterkennungseinheit (19) und die Ansteuererkennungseinheit (18) vorgesehen ist.

13. System (1) zur digitalen Übertragung mindestens eines Ansteuersignals (3) und mindestens eines ersten Datensignals (4) zwischen einer Steuervorrichtung (9) und einer Ansteuervorrichtung (12) und
zur digitalen Übertragung mindestens eines Rückmeldesignals (6) zusammen mit mindestens einem zweiten Datensignal (5) in der Gegenrichtung mit mindestens einer Anordnung nach einem der Ansprüche 11 bis 12,
wobei die Ansteuervorrichtung (12) dafür vorgesehen ist, eine Leistungshalbleitervorrichtung (13) mit einem analogen Ansteuersignal (14) anzusteuern.

14. System (1) nach Anspruch 13,
wobei die Leistungshalbleitervorrichtung (13) mindestens einen Stromrichter aufweist.

## Claims

1. Method for transmitting an actuation signal (3) and a first data signal (4) between a control device (9) and an actuation device (12) for a power semiconductor device (13), **characterised in that** transmission of the actuation signal (3) and first data signal (4) from the control device (9) to the actuation device (12) takes place simultaneously and via a common transmission channel,
the first data signal (4) is combined with the actuation signal (3) by means of a digital modulation method or coding method,
a feedback signal (6) together with a second data signal (5) is transmitted in the opposite direction,
and a coding length (27) is used for the first data signal (4) which is shorter than the interval length (25) of the actuation signal (3) and/or a coding length (27) is used for the second data signal (5) which is shorter than the interval length (25) of the feedback signal (6).

2. Method according to claim 1,
wherein the actuation signal (3) and the first data signal (4) are approximately in the form of a rectangle.

3. Method according to claim 1,
wherein the feedback signal (6) and the second data signal (5) are approximately in the form of a rectangle.

4. Method according to one of the preceding claims,
wherein the second data signal (5) is combined with the feedback signal (6) by a digital modulation method or coding method.

5. Method according to one of the preceding claims,
wherein the actuation signal (3) is transmitted at a higher data rate than the first data signal (4) and/or the feedback signal (6) is transmitted at a higher data rate than the second data signal (5).

6. Method according to one of the preceding claims,
wherein the first data signal (4) is combined with an actuation signal (3) and/or the second data signal (5) is combined with a feedback signal (6) using an XOR operation or an XNOR operation.

7. Method according to one of the preceding claims,
wherein the data signal (4, 5) is coded with the aid of pulse phase coding and/or pulse width coding, in particular by inversion.

8. Method according to one of the preceding claims,
wherein a plurality of first data signals (4) is combined with an actuation signal (3) and/or a plurality of second data signals (5) is combined with a feedback signal (6).

9. Method according to one of the preceding claims,
wherein at least one multivalent first data signal (4) is combined with at least one actuation signal (3) and/or at least one multivalent second data signal (5) is combined with at least one feedback signal (6).

10. Method according to one of the preceding claims, **characterised in that** digital information and/or data protocols are transmitted.

11. Arrangement (2) for carrying out a method according to one of claims 1 to 10,
wherein the arrangement has a transmitter (10), a transmission channel and a receiver (11),
**characterised in that** the transmitter (10) has a mixing device (15) which is provided for combination of the actuation signal (3) with at least one first data signal (4) or the feedback signal (6) is provided with at least one second data signal (5) .

12. Arrangement (2) according to claim 11,
wherein the receiver (11) has the following:
- a device for detecting the synchronisation time (17),
- at least one bit detection unit (19) which is provided for recovering and outputting the data signal (4,5),
- an actuation detection unit (18) which is provided for recovering and outputting the actuation signal (3) or the feedback signal (6), and
- a phase-locked loop (20) which is provided for supplying a reference time (29) for the bit detection unit (19) and the actuation detection unit (18).

13. System (1) for the digital transmission of at least one actuation signal (3) and at least one first data signal (4) between a control device (9) and an actuation device (12) and for the digital transmission of at least one feedback signal (6) together with at least one second data signal (5) in the opposite direction with at least one arrangement according to one of claims 11 to 12,
wherein the actuation device (12) is provided for actuating a power semiconductor device (13) with an analogue actuation signal (14).

14. System (1) according to claim 13,
wherein the power semiconductor device (13) has at least one power converter.

## Revendications

1. Procédé de transmission d'un signal (3) d'excitation et d'un premier signal (4) de données entre un système (9) de commande et un système (12) d'excitation d'un système (13) à semi-conducteur de puissance,
**caractérisé en ce que** la transmission du signal (3) d'excitation et du premier signal (4) de données du système (9) de commande au système (12) d'excitation a lieu en même temps et par un canal de transmission commun,
on combine le premier signal (4) de données au signal (3) d'excitation par un procédé de modulation numérique ou par un procédé de codage,
on transmet un signal (6) d'accusé de réception dans le sens contraire, conjointement avec un deuxième signal (5) de données,
et on utilise une longueur (27) de codage pour le premier signal (4) de données, qui est plus courte que la longueur (25) d'intervalle du signal (3) d'excitation, et/ou une longueur (27) de codage pour le deuxième signal (5) de données, qui est plus courte que la longueur (25) d'intervalle du signal (6) d'accusé de réception.

2. Procédé suivant la revendication 1,
dans lequel le signal (3) d'excitation et le premier signal (4) de données sont à peu près rectangulaires.

3. Procédé suivant la revendication 1,
dans lequel le signal (6) d'accusé de réception et le deuxième signal (5) de données sont à peu près rectangulaires.

4. Procédé suivant l'une des revendications précédentes,
dans lequel on combine le deuxième signal (5) de données au signal (6) d'accusé de réception par un procédé de modulation numérique ou par un procédé de codage.

5. Procédé suivant l'une des revendications précédentes,
dans lequel on transmet, comme deuxième signal (5) de données, le signal (3) d'excitation à un débit de données plus grand que celui du premier signal (4) de données et/ou le signal (6) d'accusé de réception à un débit plus grand que celui du deuxième signal (5) de données.

6. Procédé suivant l'une des revendications précédentes,
dans lequel on combine le premier signal (4) de données à un signal (3) d'excitation et/ou le deuxième signal (5) de données à un signal (6) d'accusé de réception, en utilisant une combinaison XOU ou une combinaison XNONOU.

7. Procédé suivant l'une des revendications précédentes,
dans lequel on code le signal (4, 5) de données à l'aide d'un codage d'impulsion en phase et/ou d'un codage d'impulsion en largeur, notamment par inversion.

8. Procédé suivant l'une des revendications précédentes,
dans lequel on combine plusieurs premiers signaux (4) de données à un signal (3) d'excitation et/ou plusieurs deuxièmes signaux (5) de données à un signal (6) d'accusé de réception.

9. Procédé suivant l'une des revendications précédentes,
dans lequel on combine au moins un premier signal (4) de données polyvalent à au moins un signal (3) d'excitation et/ou au moins un deuxième signal (5) de données polyvalent à au moins un signal (6) de réception.

10. Procédé suivant l'une des revendications précédentes, **caractérisé en ce que** l'on transmet des informations numériques et/ou des protocoles de données.

11. Dispositif (2) pour effectuer un procédé suivant l'une des revendications 1 à 10,
le dispositif ayant un émetteur (10), un canal de transmission et un récepteur (11),
**caractérisé en ce que** l'émetteur (10) a un système (15) de mélangeur prévu pour la combinaison du signal (3) d'excitation à au moins un premier signal (4) de données ou du signal (6) d'accusé de réception à au moins un deuxième signal (5) de données.

12. Dispositif (2) suivant la revendication 11,
dans lequel le récepteur (11) a ce qui suit :
- un système de détection de l'instant (17) de synchronisation,
- au moins une unité (19) de détection de bits, prévue pour recueillir et émettre le signal (4, 5) de données,
- une unité (18) de détection d'excitation, prévue pour recueillir et émettre le signal (3) d'excitation ou le signal (6) d'accusé de réception et
- une boucle (20) de régulation de phase, prévue pour mettre un instant (29) de référence à disposition de l'unité (19) de détection de bits et de l'unité (18) de détection d'excitation.

13. Système (1) de transmission numérique d'au moins un système (3) d'excitation et d'au moins un premier signal (4) de données entre un système (9) de commande et un système (12) d'excitation et pour la transmission numérique d'au moins un signal (6) d'accusé de réception, ensemble avec au moins un deuxième signal (5) de données, en sens contraire, par au moins un dispositif suivant l'une des revendications 11 à 12,
dans lequel le système (12) d'excitation est prévu pour exciter un système (13) à semi-conducteur de puissance par un signal (14) d'excitation analogique.

14. Système (1) suivant la revendication 13,
dans lequel le système (13) à semi-conducteur de puissance a au moins un convertisseur.
